# EUROPÄISCHE PATENTSCHRIFT

(11) **EP 2 607 859 B1**
(45) Veröffentlichungstag und Bekanntmachung des Hinweises auf die Patenterteilung: **28.08.2024**
(21) Anmeldenummer: 12199001.4
(22) Anmeldetag: 21.12.2012
(51) Int. Cl.: G01D 11/30, G01D 11/24

(54) **Tragekörper zur Aufnahme eines Sensors**
Support body for holding a sensor
Corps de support destiné à la réception d'un capteur

(30) Priorität: 21.12.2011 DE 102011089365
(43) Veröffentlichungstag der Anmeldung: 26.06.2013
(73) Patentinhaber: Hirschmann Automotive GmbH, 6830 Rankweil-Brederis (AT)
(72) Erfinder: Jäger, Günter, 6840 Götzis (AT)
(74) Vertreter: Greif, Thomas

(56) Entgegenhaltungen:
- EP-A2- 1 672 328
- WO-A2-2005/080922
- DE-A1- 102006 030 133
- DE-A1- 19 640 255
- FR-A1- 2 864 700
- US-A- 5 631 557

## Beschreibung

Die Erfindung betrifft eine Sensorvorrichtung sowie ein Verfahren zur Herstellung einer Sensorvorrichtung, aufweisend ein Sensorelement, das an einem Tragekörper befestigt ist, wobei das Sensorelement zumindest einen Anschlusskontakt aufweist, der an zumindest einem elektrischen Leiter eines Kabels elektrisch kontaktiert ist, wobei das Sensorelement sowie der Tragekörper in einem Gehäuse aus einem Kunststoffmaterial angeordnet sind, gemäß den jeweiligen Oberbegriffen der beiden unabhängigen Patentansprüche.

Bezüglich des Verfahrens zur Herstellung einer solchen Sensorvorrichtung ist es bekannt, dass das Sensorelement an einem Tragekörper befestigt wird, wobei der Anschlusskontakt des Sensorelementes mit dem elektrischen Leiter des Kabels elektrisch kontaktiert wird und dann das Sensorelement zusammen mit dem Tragekörper in einem Gehäuse aus einem Kunststoffmaterial angeordnet wird.

Bei einem aus der FR 2 864 700 A1 bekannten Verfahren besteht das Verfahren darin, die elektronische Einheit, beispielsweise einen integrierten Schaltkreis, des Sensors in den ersten Teil eines Kunststoffgehäuses einzuformen und ein Kabel in den ersten Teil des Gehäuses einzupassen, sodass seine Drähte Kontakt mit Anschlüssen an der elektronischen Einheit herstellen, und dann den Rest des Gehäuses über die elektronische Einheit zu umspritzen, um diese zu umschließen.

Bei der US 5 631 557 A wird ein Magnetsensor bereitgestellt, bei dem ein flexibles Substrat verwendet wird, um eine magnetisch empfindliche Komponente und andere elektronische Komponenten relativ zur Position eines Permanentmagneten zu halten. Ein duroplastisches Material wird als Einkapselungsmittel verwendet, um einen massiven Magnetsensor zu bilden, bei dem die magnetisch empfindliche Komponente, der Permanentmagnet und ein Teil des flexiblen Substrats nach dem Erstarren im duroplastischen Material eingekapselt werden. Ein Teil des flexiblen Substrats erstreckt sich von einem Ende der verfestigten Kapselung, um eine elektrische Verbindung zu anderen Komponenten und Geräten zu ermöglichen.

Aus der DE 196 40 255 A1 ist ein Verfahren zur Herstellung eines elektronischen Moduls bekannt, bei dem elektronische Bauelemente auf noch nicht vereinzelte Leadframes bestückt und dort angelötet werden, und bei dem anschließend die bestückten Leadframes in zwei Phasen mit Kunststoff umspritzt werden, wobei in einer ersten Spritzphase die Verbindungsstege, mit denen die Leiterbahnen der einzelnen Leadframes untereinander und die Leadframes selbst miteinander verbunden werden, mittels der ersten Spritzgießform span los getrennt werden, und wobei anschließend mindestens ein Extrateil in eine Nische des während der ersten Spritzphase hergestellten Kunststoffkörpers eingelegt wird, wobei daraufhin der Kunststoffkörper in einer zweiten Spritzphase mit einer zweiten Spritzgießform endumspritzt wird.

Beschrieben ist in der DE 10 2006 030 133 A1 ein Sensor einer elektrischen Moduleinheit sowie ein Verfahren zur Herstellung von Sensor und Moduleinheit. Die Moduleinheit umfasst ein Leitungsgitter mit Leitungssträngen und mindestens einem Flächenbereich, auf den der Rohchip eine integrierte Sensor-Schaltung aufgebracht ist. Ein Isolierkörper ist so gebildet, dass mehrere Leitungsstränge und die integrierte Schaltung eingebettet sind. An einem Grundelement aus Kunststoff sind flache Leiterelemente vorgesehen, die mit einem Steckeranschluss verbunden sind. Die elektrische Moduleinheit wird an dem Grundelement angeordnet, wobei die Leitungsstränge mit den Leiterelementen verbunden werden. Das Leitungsgitter weist ein Loch auf, in das ein Zapfen des Grundelements eingreift. Die elektrische Moduleinheit wird aus einem Streifenelement durch Stanzen und Platzieren des Rohchips hergestellt. In einem Material-Entfernungsschritt werden weitere Teile des Streifenelements entfernt, so dass die elektrische Moduleinheit weiterhin mechanisch mit dem Streifenelement verbunden ist, aber elektrisch mindestens teilweise von diesem so isoliert ist, dass die integrierte Schaltung mindestens zum Teil funktionsfähig ist.

In der EP 1 672 328 A2 wird ein Magnetfeldsensor, insbesondere ein Drehzahlsensor und/oder Drehrichtungssensor und/oder Positionssensor für den Antriebsstrang eines Kraftfahrzeuges, sowie ein Verfahren zur Herstellung eines derartigen Magnetfeldsensors vorgeschlagen, welcher eine Sensoranordnung mit einem auf ein Magnetfeld reagierenden Sensorelement und gegebenenfalls einen Dauermagneten aufweist, wobei letzterer gemeinsam mit der Sensoranordnung und Teilen von Anschluss-Leiterbahnen mit Kunststoff umhüllt ist und die Leiterbahnen einteilig mit einer Arretierung für den Dauermagnet und die Sensoranordnung als Stanzgitter ausgebildet sind. Das Stanzgitter ist hierbei als dreidimensionale Struktur geformt, welche die Sensoranordnung trägt und gegebenenfalls den Dauermagneten nach Art einer Halterung umgreift. Die Halterung und die Anschluss-Leiterbahnen werden aus einem Blech zunächst als gitterartige Abwicklung ausgestanzt und anschließend zu der Halterung verformt.

Die WO 2005/080922 A2 betrifft einen Sensorhalter zum Lagern eines Sensorbauteils, insbesondere eines Hall-Sensors, mit einer länglichen Halteeinrichtung, an deren erstem axialen Ende das Sensorbauteil gelagert ist, wobei an deren zweitem axialen Ende ein Anschlusskabel heranführbar ist, dessen Adern mit Anschlüssen des Sensorbauteiles verbindbar sind. Dabei weist die Halteeinrichtung einen Kunststoffträger, an dem das Sensorbauteil gelagert ist, und einen den Kunststoffträger umschließenden metallischen Außenträger, insbesondere eine Metallhülse, auf.

Der Erfindung liegt die Aufgabe zugrunde, eine gegenüber dem Stand der Technik verbesserte Sensorvorrichtung bereitzustellen, die hinsichtlich ihrer Herstellung verbessert ist und besser an den jeweiligen Bauraum nach ihrer Herstellung angepasst ist. Außerdem soll ein Herstellungsverfahren angegeben werden, mit dem eine solche Sensorvorrichtung verbessert automatisiert herstellbar ist.

Diese Aufgabe ist durch die Merkmale der unabhängigen Patentansprüche gelöst.

Hinsichtlich der Sensorvorrichtung an sich ist erfindungsgemäß vorgesehen, dass der Tragekörper von einem Hauptkörper sowie einem Aufnahmekörper für das Sensorelement gebildet ist und der Hauptkörper sowie der Aufnahmekörper zueinander ausrichtbar miteinander verbunden sind. Dies hat den Vorteil, dass das Sensorelement an seinem Aufnahmekörper festgelegt werden kann. Danach erfolgt die Ausrichtung des Aufnahmekörpers von einer ersten Position in eine davon abweichende Position in Bezug auf den Hauptkörper, wodurch der Prozess des Festlegens des Sensorelementes an seinem Aufnahmekörper verbessert wird. Denn in der ersten Position des Aufnahmekörpers in Bezug auf den Hauptkörper steht ausreichend Platz zur Verfügung, um das Sensorelement an dem Aufnahmekörper festzulegen. Dieser Festlegeprozess wird dabei nicht von dem Hauptkörper gestört, sodass das Festlegen des Sensorelementes an seinem Aufnahmekörper optimiert in einem automatisierten Prozess ausgeführt werden kann. Erst nachdem das Sensorelement an seinem Aufnahmekörper festgelegt worden ist, wird dieser Aufnahmekörper von seiner bisherigen Position zu dem Hauptkörper in eine davon abweichende Position ebenfalls zu dem Hauptkörper gebracht. Dabei ist es von Vorteil, dass der Aufnahmekörper und der Hauptkörper miteinander verbunden sind, sodass dadurch die Teilevielfalt reduziert und die Bewegung des Aufnahmekörpers von seiner ersten Position in eine davon abweichende Position in Bezug auf den Hauptkörper vorgegeben ist. Vor oder nach dem Ausrichten des Aufnahmekörpers kann das Sensorelement, genauer dessen Anschlusskontakte, mit dem Kabel, genauer mit dessen elektrischen Leitern, elektrisch kontaktiert werden. Dabei ist es von besonderem Vorteil, wenn die elektrische Kontaktierung nach dem Ausrichten des Aufnahmekörpers in Bezug auf den Hauptkörper erfolgt, da in einem solchen Fall die Anschlusskontakte des Sensorelementes flächig an dem Hauptkörper des Tragekörpers anliegen und dieser eine Basis für den anschließenden Kontaktierungsprozess bildet. Eine solche Basis ist beispielsweise dann von besonderem Vorteil, wenn das Ende des elektrischen Leiters mittels eines Löt- oder Verstemmvorgangs mit dem Anschlusskontakt des Sensorelementes erfolgt.

In Weiterbildung der Erfindung sind der Hauptkörper und der Aufnahmekörper des Tragekörpers durch ein Filmscharnier miteinander verbunden. In diesem Fall sind beispielsweise der Haupt- und der Aufnahmekörper ein einstückiges Bauteil, vorzugsweise aus Kunststoff, weiter vorzugsweise hergestellt durch ein Kunststoffspritzgussverfahren. Durch die Verbindung dieser beiden Körper mittels des Filmscharnieres wird es in einfacher Art und Weise möglich, dass sie zueinander ausrichtbar miteinander verbunden sind. Alternativ dazu ist es an dieser Stelle auch denkbar, dass der Hauptkörper und der Tragekörper nicht miteinander verbunden sind, das heißt, dass es sich hier um zwei einzelne Bauteile handelt.

Durch das Filmscharnier wird auf besonders einfache Art und Weise gewährleistet, dass der Aufnahmekörper mit dem Sensorelement von seiner ersten Position in die davon abweichende weitere Position in Bezug auf den Hauptkörper gebracht werden kann. Dieser Positionswechsel wird in besonders vorteilhafter Weise dadurch begrenzt, dass zunächst die Anschlusskontakte des Sensorelementes (nachdem es in den Aufnahmekörper eingesetzt und dort festgelegt worden ist) noch nicht an dem Hauptkörper anliegen und erst nach Positionswechsel flächig an dem Hauptkörper anliegen, sodass dadurch auch die Bewegung beim Positionswechsel, das heißt beim Ausrichten, begrenzt wird.

In Weiterbildung der Erfindung ist vorgesehen, dass vor dem Ausrichtvorgang der Aufnahmekörper für das Sensorelement in einer Montageposition, in der das Sensorelement an dem Aufnahmekörper festgelegt wird, abgewinkelt zu dem Hauptkörper ausgerichtet ist. Diese abgewinkelte Ausrichtung des Aufnahmekörpers in Bezug auf den Hauptkörper kann durch den Herstellvorgang des gesamten Tragekörpers, insbesondere durch die Ausgestaltung des Filmscharnieres, vorgegeben werden. Alternativ dazu ist es denkbar, dass vor dem Ausrichtvorgang der Aufnahmekörper noch nicht abgewinkelt zu dem Hauptkörper ausgerichtet ist. Durch einen entsprechenden Verfahrensschritt wird dann vor der Festlegung des Sensorelementes an dem Aufnahmekörper dieser Aufnahmekörper abgewinkelt in die Montageposition gebracht. Dies bietet den Vorteil, dass der gesamte Tragekörper (bestehend aus Aufnahmekörper und Hauptkörper und gegebenenfalls dem Filmscharnier oder der sonstigen Verbindung untereinander) in einer ersten Formgebung (zum Beispiel längsgestreckt) hergestellt werden kann. Erst danach kann die Abwinklung zum Erzielen der Montageposition des Sensorelementes an dem Aufnahmekörper erfolgen. Dies hat den Vorteil, dass solche längsgesteckten Tragekörper hinsichtlich ihrer Bevorratung und Handhabung einfacher sind als abgewinkelte Tragekörper. Alternativ dazu hat die abgewinkelte Montageposition des Aufnahmekörpers in Bezug auf den Hauptkörper den Vorteil, dass ein weiterer Schritt zum Erzielen der Montageposition entfallen kann und der schon fertige Tragekörper zur weiteren Verarbeitung zur Verfügung steht.

In Weiterbildung der Erfindung weist der Hauptkörper zumindest einen Führungskanal auf. In besonders vorteilhafter Weise sind so viele Führungskanäle vorhanden, wie das Sensorelement Anschlusskontakte hat. Das bedeutet gleichzeitig, dass so viele Führungskanäle vorhanden sind, wie auch das Kabel Leitungen aufweist. Durch diese Führungskanäle wird gewährleistet, dass einerseits die Anschlusskontakte des Sensorelementes nur oder auch in dem Hauptkörper geführt werden. Diese Führung erfolgt insbesondere während der Ausrichtung der beiden Körper zueinander, aber auch nach deren Ausrichtung zueinander. Weiterhin ist von Vorteil, dass, nachdem sich die Anschlusskontakte des Sensorelementes in den jeweiligen Führungskanälen befinden, auch die Enden der Leitungen das Kabels, insbesondere mit dessen freigelegten elektrischen Leitern, in den Führungskanälen angeordnet werden können. Eine solche Führung bzw. lagegenaue Anordnung der Anschlusskontakte bzw. der Enden der elektrischen Leiter an dem Tragekörper, vorzugsweise an dem Hauptkörper, ist deshalb besonders wichtig, da der Vorgang des elektrischen Kontaktierens der Anschlusskontakte mit den elektrischen Leitern ebenfalls automatisiert erfolgen soll. Durch die Führungskanäle an dem Hauptkörper wird somit sichergestellt, dass dort die Anschlusskontakte des Sensorelementes liegen und anschließend die elektrischen Leiter über die Anschlusskontakte gelegt werden können (oder umgekehrt). Danach ist es automatisiert möglich, in diesem Kontaktbereich den elektrischen Kontakt zwischen den Anschlusskontakten des Sensorelementes und den Enden der elektrischen Leiter des Kabels durchzuführen. Dies kann beispielsweise durch Verlöten, Verschweißen, Verstemmen, Vercrimpen, elektrisch Verkleben oder dergleichen erfolgen. In diesem Zusammenhang ist es noch wichtig, darauf hinzuweisen, dass für den Fall, dass ein Verbindungsprozess mit hohen Temperaturen gewählt ist (wie zum Beispiel ein Löt- oder Schweißvorgang), das Material des Tragekörpers, insbesondere dessen Hauptkörpers, entsprechend hitzebeständig ausgebildet ist.

In Weiterbildung der Erfindung weist der Hauptkörper zumindest ein Fixierelement und/oder zumindest einen Vorsprung auf. Das jeweils vorhandene Fixierelement bzw. der jeweils vorhandene Vorsprung kann unterschiedliche Aufgaben haben. Zum einen kann mit einem solchen Fixierelement (ausgebildet zunächst als Vorsprung) eine weitere Lagefixierung der Leitung, des Kontaktbereiches oder der Anschlusskontakte des Sensorelementes an dem Hauptkörper erfolgen. Dies erfolgt in vorteilhafter Weise durch einen Umformvorgang des zumindest einen Vorsprunges, wie zum Beispiel ein Warm- oder Kaltverprägen. Alternativ dazu kann das Fixierelement als Rastelement ausgebildet sein, sodass die elektrische Leitung, der Kontaktbereich und/oder der Anschlusskontakt des Sensorelementes mittels dieses Rastelements an dem Hauptkörper festgelegt werden. Alternativ oder ergänzend zu dem Fixierelement, mit dem die Leitung des Kabels und/oder der Kontaktbereich und/oder der Anschlusskontakt des Sensorelementes an dem Hauptkörper festgelegt wird, kann ein solches zumindest eine Fixierelement dafür vorgesehen sein, dass der gesamte Tragekörper in ein Werkzeug eingesetzt und dort mit diesem Fixierelement in seiner Lage positioniert wird, wenn das Gehäuse der gesamten Sensorvorrichtung montiert wird. Dabei ist es denkbar, dass das Gehäuse als separates Bauteil schon vorgefertigt ist und der gesamte Tragekörper nach seiner Montage in diesem Gehäuse angeordnet wird. In einem solchen Fall weist auch das Gehäuse der Sensorvorrichtung mit dem Fixierelement des Tragekörpers korrespondierende Elemente auf. Wenn das Gehäuse der Sensorvorrichtung als eine Umspritzung gebildet wird, ist das zumindest eine Fixierelement des Hauptkörpers dazu geeignet und ausgebildet, diesen in einem Werkzeug festzulegen, sodass der gesamte vormontierte Tragekörper mit dem Sensorelement in dem Werkzeug in seiner Sollposition für den nachfolgenden Umspritzvorgang mit einem Kunststoffmaterial positioniert wird.

In Weiterbildung der Erfindung weist der Aufnahmekörper für das Sensorelement zumindest ein Fixierelement auf. Auch hier kann ein solches Fixierelement verschiedene Funktionen haben. Zum einen dient ein solches Fixierelement dazu, das Sensorelement an seinem Aufnahmekörper festzulegen. Dieser Festlegevorgang kann ebenfalls durch Verprägen, Verstemmen, Verrasten oder dergleichen erfolgen, wozu das Fixierelement oder auch mehrere Fixierelemente entsprechend ausgebildet ist/sind. Alternativ oder ergänzend dazu kann ein solches zumindest eine Fixierelement auch, wie schon bei dem Hauptkörper, dazu geeignet und ausgebildet sein, den vormontierten Tragekörper in dem Gehäuse der Sensorvorrichtung festzulegen. Diesbezüglich gilt für das Fixierelement des Aufnahmekörpers das gleiche wie für das Fixierelement des Hauptkörpers. Das zumindest eine Fixierelement zur Festlegung des vormontierten Tragekörpers in dem Gehäuse der Sensorvorrichtung ist dabei entweder nur an dem Hauptkörper oder nur an dem Aufnahmekörper oder an beiden entweder einfach oder mehrfach, vorzugsweise jeweils zweifach, vorhanden.

Von besonderem Vorteil ist es, wenn das Gehäuse der Sensorvorrichtung von einer Umspritzung aus einem Kunststoffmaterial gebildet ist. Zum einen lässt sich durch entsprechende Formgebung eines Werkzeuges die Form des Gehäuses der Sensorvorrichtung flexibel anpassen, sodass durch diese Formgebung eine individuelle Anpassung des Gehäuses der Sensorvorrichtung an deren Bauraum erfolgen kann. Ein weiterer Vorteil ist darin zu sehen, dass mit der Umspritzung die beteiligten Elemente (Tragekörper mit Hauptkörper und Aufnahmekörper sowie Sensorelemente und Kabelende) zusätzlich in ihrer Lage zueinander fixiert und diese ganze Einheit stabil ausgebildet werden kann. Schließlich ist noch der Vorteil zu nennen, dass durch die Umspritzung (bzw. durch die Bildung eines Gehäuses auch in anderer Form) die beteiligten Bauelemente vor äußeren Einflüssen geschützt untergebracht sind. Dies ist bei der Umspritzung dann von besonderem Vorteil, wenn das Material des Gehäuses auf das Material des Außenmantels des Kabels abgestimmt wird, sodass dieser Bereich eine innige Verbindung eingeht und damit gewährleistet ist, dass keine Feuchtigkeit oder Wasser oder Verunreinigungen in den Innenbereich der Sensorvorrichtung eindringen kann.

Das Sensorelement an sich kann ein beliebiges Sensorelement zur berührungslosen Erfassung von Parametern sein. Beispielhaft ist hier ein kapazitiv oder induktiv wirkendes Sensorelement genannt, welches beispielsweise für die Ermittlung von Umdrehungen eines Bauteiles ausgebildet ist. Die Erfassung solcher Parameter erfolgt entweder durch das Sensorelement alleine oder mit mit dem Sensorelement zusammenwirkenden Hilfsmitteln. Solche Hilfsmittel sind zum Beispiel bei einem Sensorelement, bei dem es sich um ein Hall-Element handelt, ein Magnet, der an dem zu erfassenden Bauteil angebracht ist. Die vorstehende Erwähnung von Messprinzipien und Sensorelementen ist nur beispielhaft und nicht abschließend.

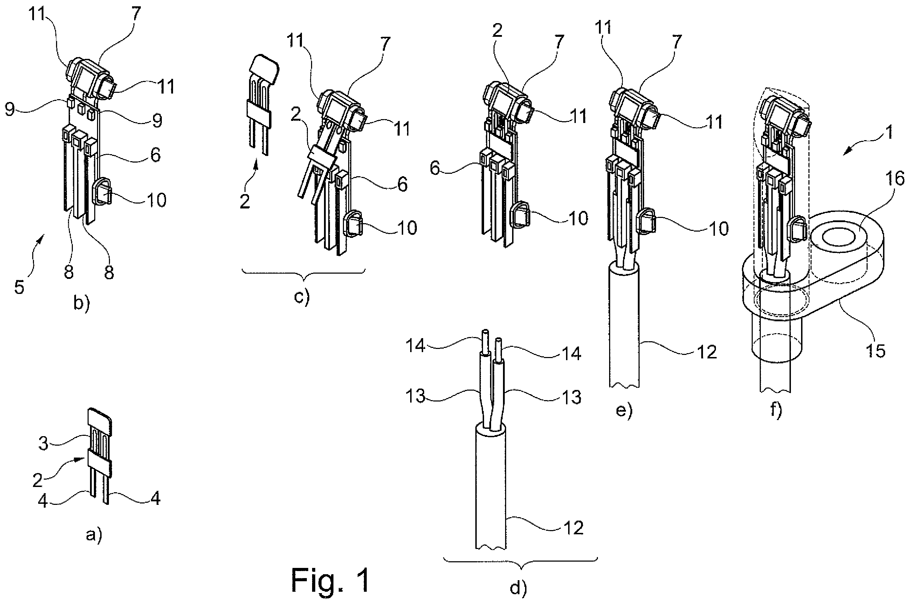

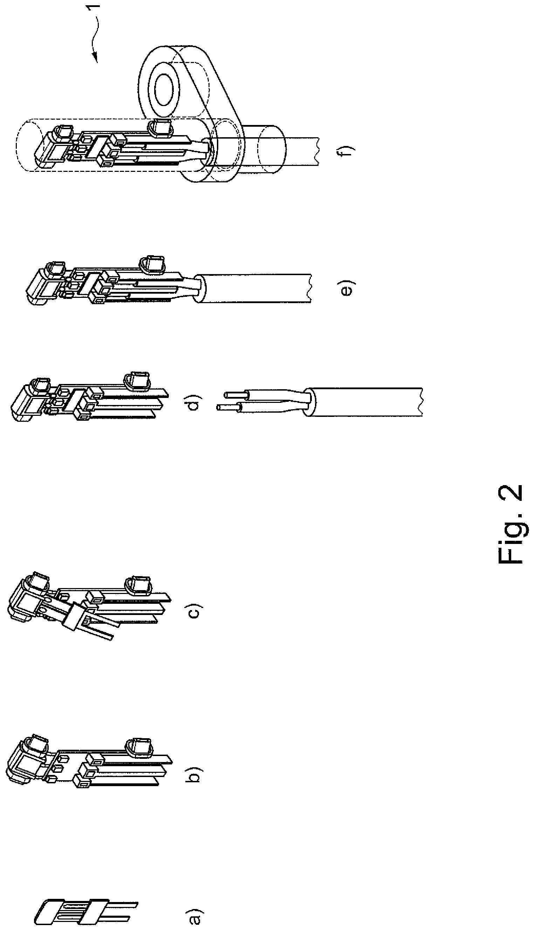

Das erfindungsgemäße Verfahren zur Herstellung einer Sensorvorrichtung sowie eine beispielhafte Ausgestaltung einer solchen Sensorvorrichtung ist anhand der Figuren 1 und 2 erläutert.

In Figur 1, insbesondere in Figur 1f), ist, soweit im Einzelnen dargestellt, eine Sensorvorrichtung 1 gezeigt.

Figur 1a) zeigt einen Sensor 2, der aus einem Sensorelement 3 zur Erfassung eines beliebigen Parameters, insbesondere zur berührungslosen Erfassung, mit zugehörigen Anschlusskontakten 4 besteht. In diesem Fall sind zwei Anschlusskontakte 4 vorhanden, an denen ein den erfassten Parameter repräsentierendes Signal zur Verfügung steht. Je nach Ausgestaltung des Sensors 2, des Messprinzipes bzw. des Anwendungszweckes der gesamten Sensorvorrichtung 1 kann auch nur ein Anschlusskontakt oder können auch mehrere Anschlusskontakte vorhanden sein.

In Figur 1b) ist der Tragekörper 5 gezeigt, der erfindungsgemäß aus einem Hauptkörper 6 und einem Aufnahmekörper 7 besteht. Dieser Tragekörper 5 ist ein einstückiges Bauteil, wobei der Hauptkörper 6 sowie der Aufnahmekörper 7 zueinander ausrichtbar miteinander verbunden sind. In diesem Fall besteht die Verbindung zwischen diesen beiden Körpern 6, 7 aus einem Filmscharnier. Andere Verbindungseinrichtungen sind denkbar. In diesem Fall ist der Aufnahmekörper 7 in einer abgewinkelten Position zu dem Hauptkörper 6 nach der Herstellung des gesamten Tragekörpers 5 ausgerichtet. In einem Beispielfall besteht die Ausrichtung aus einer Abwinklung mit einem Winkel größer 10 Grad, vorzugsweise 30 Grad, jeweils bezogen auf die Längsachsen, die durch die beiden Körper 6, 7 verlaufen. Diese abgewinkelte Ausrichtung des Aufnahmekörpers 7 in Bezug auf den Hauptkörper 6 bietet Vorteile hinsichtlich der Montierbarkeit des Sensors 2 an dem Aufnahmekörper 7 und/oder Vorteile bei der Ausrichtung des Sensors 2 in Bezug auf das Bauteil, dessen Parameter gemessen werden soll.

Weiterhin ist in Figur 1b) erkennbar, dass der Hauptkörper 6 zumindest einen Führungskanal 8 aufweist. Dieser Führungskanal 8 ist entsprechend der Anzahl der Anschlusskontakte 4 des Sensorelementes 3 vorhanden und gebildet durch länglich gestaltete und vorzugsweise parallel zueinander verlaufende Erhebungen, die von einer plattenförmigen Basis des Hauptkörpers 6 abstehen. Weiterhin weist der Hauptkörper 6 zumindest einen Vorsprung 9 auf, mit dem der Sensor 2 an dem Hauptkörper 6 festgelegt werden kann. Weiterhin sind an dem Hauptkörper 6 zumindest ein Fixierelement 10 undloder, vorzugsweise und, an dem Aufnahmekörper 7 zumindest ein Fixierelement 11 vorhanden. Bei einer besonders vorteilhaften Ausgestaltung des gesamten Tragekörpers 5 sind zwei Fixierelemente 10 einander gegenüberliegend an dem Hauptkörper 6 und weiterhin zwei einander gegenüberliegende Fixierelemente 11 an dem Aufnahmekörper 7 vorhanden.

In Figur 1c) ist gezeigt, wie der Sensor 2 an dem Aufnahmekörper 7 festgelegt wird. Durch die abgewinkelte Position des Aufnahmekörpers 7 in Bezug auf den Hauptkörper 6 wird es möglich, den Sensor 2, vorzugsweise mit seiner einen Stirnseite, in den Aufnahmekörper 7 einzuschieben. In diesem Fall hat der Aufnahmekörper 7 entsprechende Führungen, die dazu geeignet und ausgebildet sind, den Sensor 2 aufzunehmen. In diesem Fall ist der Sensor 2 flächig gerade ausgebildet (rechte Darstellung der Figur1c)), sodass nach dem Einschieben (oder alternativ Verrasten) des Sensors 2 an dem Aufnahmekörper 7 dessen Anschlusskontakte noch von dem Hauptkörper 6 abstehen. Würde eine abgewinkelte Ausführung des Sensors 2 (siehe Figur 1c) in der linken Darstellung) verwendet, und wäre diese Abwinklung genauso ausgerichtet wie der Aufnahmekörper 7 zu dem Hauptkörper 6 ausgerichtet ist, dann würden die Anschlusskontakte 2 (und gegebenenfalls ein weiterer Teil des Sensors 2) schon planparallel zu dem Hauptkörper 6 in dessen Führungskanälen 8 zur Anlage kommen. Wird ein flächig und sich gerade erstreckender Sensor 2 eingesetzt, ist noch ein weiterer Abwinklungsvorgang erforderlich. In diesem Fall wird von Hand oder automatisiert ein Teil des Sensors 2 so abgewinkelt, dass jetzt auch ein weiterer Teil des Sensors 2 und vor allen Dingen auch die Anschlusskontakte 4 in den Führungskanälen 8 des Hauptkörpers 6 zur Anlage kommen.

In Figur 1d) ist nun gezeigt, dass der Sensor 2 abgewinkelt war oder abgewinkelt worden ist und danach an seinem Aufnahmekörper 7 festgelegt wurde. Damit ist der gesamte Tragekörper 5 vorbereitet, um den Sensor 2 mit einem Kabel 12 zu verbinden. Das Kabel 12 weist zumindest eine Leitung, hier zwei Leitungen 13 (oder auch mehr als zwei Leitungen) auf. Das Kabel 12 weist einen Außenmantel auf, der die Leitungen 13 umgibt. Die Leitungen 13 weisen ebenfalls Außenmäntel auf, die jeweils einen elektrischen Leiter 14 umgeben. Zur Verbindung des Kabels 12 mit dem Sensor 2 ist ein Stück des Außenmantels des Kabels 12 entfernt und auch ein Stück des Außenmantels der Leitungen 13 entfernt worden. Somit liegen in entsprechender Länge Endbereiche der elektrischen Leiter 14 vor, damit diese mit den Anschlusskontakten 4 verbunden werden können. Der Kontaktbereich für die Anschlusskontakte 4 mit den Endbereichen der elektrischen Leiter 14 liegt im Bereich der Führungskanäle 8 des Hauptkörpers 6, sodass für den anschließenden Kontaktierungsvorgang die genaue Position des Kontaktbereiches vorgegeben ist. Dies ist besonders wichtig für einen automatisierten Kontaktierungsvorgang. Außerdem befindet sich ein Teil der Leitungen 13, die von dem Außenmantel des Kabels 12 befreit worden sind, in den Führungskanälen 8 des Hauptkörpers 6, sodass sich in einem solchen Fall eine vorgebbare längsgestreckte Ausrichtung des Tragekörpers 5 in Bezug auf das Kabel 12 ergibt. Auch dies ist für den weiteren Montageschritt dieser vorbereiteten Einheit, die in Figur 1e) gezeigt ist, mit dem Gehäuse der Sensorvorrichtung 11 wichtig.

Bezüglich des Gehäuses ist es denkbar, dass dieses einteilig oder mehrteilig, vorzugsweise zweiteilig gestaltet ist, und die in Figur 1e) vormontierte Einheit in dieses Gehäuse eingesetzt wird. Ist dieses Gehäuse beispielsweise zweiteilig, kann die vormontierte Einheit in den einen Gehäuseteil, vorzugsweise in die eine Gehäusehälfte, eingesetzt und danach der zweite Gehäuseteil (vorzugsweise die zweite Gehäusehälfte) montiert werden. Ist das Gehäuse einteilig ausgestaltet, kann zum Beispiel die in Figur 1e) gezeigte vormontierte Einheit in das Gehäuse, welches an einer Seite offen und ansonsten geschlossen ist, eingeführt und das Innere des Gehäuses mit entsprechendem Füllmaterial vergossen werden.

Von besonderem Vorteil sowohl hinsichtlich der Herstellung des Gehäuses als auch während des Betriebes der Sensorvorrichtung 1 ist es, wenn das Gehäuse von einer Umspritzung aus einem Kunststoffmaterial gebildet ist. Dies ist in Figur 1f) gezeigt. Dort ist erkennbar, dass die in Figur 1e) gezeigte vormontierte Einheit mit einer Umspritzung 15 versehen worden ist. Je nach Einbauraum der Sensorvorrichtung 1 kann dabei auch ein Befestigungselement, insbesondere ein ringförmiges Befestigungselement 16 mit einer zugänglichen Durchführungsöffnung, von der Umspritzung 15 festgelegt werden. Um die Umspritzung 15 zu realisieren, wird die in Figur 1e) gezeigte vormontierte Einheit in einem nicht dargestellten Werkzeug, insbesondere einem zwei- oder mehrteiligen Spritzgusswerkzeug eingelegt, wobei die vormontierte Einheit in diesem Werkzeug durch das zumindest eine Fixierelement undloder das zumindest eine Fixierelement 18 in seiner Lage in dem Werkzeug positioniert wird. Anschließend erfolgt der Kunststoffspritzgussvorgang, wozu das Werkzeug, genauer dessen Innenraum, mit einem Kunststoffmaterial aufgefüllt wird. Bei diesem Spritzgussvorgang kann das Innere des Werkzeuges nur mit der Schwerkraft mit einem flüssigen und anschließend erstarrenden Füllmaterial aufgefüllt werden oder alternativ unter Druck in das Werkzeug eingespritzt werden. Dabei werden innerhalb des Werkzeuges alle Bereiche der vormontierten Einheit mit Kunststoffmaterial umgeben und sind somit vor äußeren Beanspruchungen wie Verschmutzungen, Einwirkungen durch Feuchtigkeit und dergleichen geschützt. Außerdem wird die vormontierte Einheit stabilisiert und kann ohne weiteres bei der Lagerung, dem Transport und dem Einbau sowie dem späteren Betrieb gehandhabt werden. Die äußere Formgebung der Umspritzung 15 bzw. des Gehäuses der Sensorvorrichtung 1 entspricht dabei dem Einbauort. Die Abwinklung des Sensors 2 innerhalb des sich länglich erstreckenden Gehäuses, insbesondere der Umspritzung 15, kann durch eine entsprechende Konturgebung des Gehäuses, insbesondere im Bereich des Sensors 2 (der nicht mehr sichtbar ist) wiedergegeben werden. In besonders vorteilhafter Weise entspricht dann beispielsweise eine Abschrägung am Ende des Gehäuses der Lage des Sensors 2, wobei dann diese Abschrägung des Gehäuses planparallel zu der Oberfläche des flächig ausgebildeten Sensors 2 ausgerichtet ist.

An dieser Stelle sei erwähnt, dass in der Figur 1 ein rechteckförmiger und flächig gestalteter Sensor 2 gezeigt ist. Die Erfindung ist jedoch nicht auf eine solche Bauform beschränkt, sodass auch andere geometrische Bauformen eines solchen Sensors in Betracht kommen.

In den Figuren 2a) bis f) sind prinzipiell die gleichen Elemente mit gleichen Bezugsziffern und die gleichen Verfahrensschritte gezeigt, die auch in den Figuren 1a) bis f) gezeigt und beschrieben worden sind. Der einzige Unterschied ist darin zu sehen, dass in der vormontierten Einheit, gezeigt in Figur 2e), der Aufnahmekörper 7 nicht abgewinkelt, sondern in der gleichen Längsachse wie der Hauptkörper 6, ausgerichtet ist. Diese vormontierte Einheit wird in vorteilhafter Weise dadurch hergestellt, dass gemäß Figur 2b) der Aufnahmekörper 7 abgewinkelt zu dem Hauptkörper ausgerichtet hergestellt wird. Anschließend erfolgt das Einsetzen des geraden und flächig gestalteten Sensors 2 in den Aufnahmekörper 7 (dargestellt in Figur 2c)) und danach die Abwinklung des Aufnahmekörpers 7 in etwa in die gleiche Ebene, in der sich der Hauptkörper 6 befindet. Danach können, wie auch schon zu Figur 1 geschrieben, die Enden der elektrischen Leiter 14 mit den Anschlusskontakten 4 des Sensors 2 verbunden werden, sodass sich letztendlich dadurch die vormontierte Einheit gemäß Figur 2e) ergibt. An dieser Stelle ist es auch noch denkbar, bei dem in Figur 2c) gezeigten Schritt nicht einen sich gerade und flächig erstreckenden Sensor 2 einzusetzen, sondern auch schon einen abgewinkelt (analog zu Figur 1c), linke Darstellung) gestalteten Sensor 2 zu verwenden. In einem solchen Fall wird dann in dem Schritt, wie er beim Übergang von Figur 2c) hin zu Figur 2d) erfolgt, nicht nur der Aufnahmekörper 7 in eine andere Position zu dem Hauptkörper 6 gebracht, sondern dabei auch der vorher abgewinkelt gestaltete Sensor 2 erneut abgewinkelt, um in eine längsgestreckte Ausrichtung gebracht zu werden. Dies kann beispielsweise dann erforderlich sein, wenn sichergestellt werden soll, dass die Anschlusskontakte 4 des Sensors 2 unter Vorspannung in den Führungskanälen 8 des Hauptkörpers 6 zur Anlage kommen sollen.

### Bezugszeichenliste

- 1.: Sensorvorrichtung
- 2.: Sensor
- 3.: Sensorelement
- 4.: Anschlusskontakte
- 5.: Tragekörper
- 6.: Hauptkörper
- 7.: Aufnahmekörper
- 8.: Führungskanal
- 9.: Vorsprung
- 10.: Fixierelement
- 11.: Fixierelement
- 12.: Kabel
- 13.: Leitung
- 14.: Elektrischer Leiter
- 15.: Umspritzung
- 16.: Befestigungselement

## Patentansprüche

1. Sensorvorrichtung (1), aufweisend einen Sensor (2), der aus einem Sensorelement (3) zur Erfassung eines Parameters und zumindest einem zugehörigen Anschlusskontakt (4) besteht, einen einstückigen Tragekörper (5), der aus einem Hauptkörper (6) und einem Aufnahmekörper (7) für das Sensorelement (3) besteht, ein Gehäuse (15) aus einem Kunststoffmaterial, und ein Kabel (12) mit zumindest einem elektrischen Leiter (13), wobei das Sensorelement (3) an dem Aufnahmekörper (7) befestigt ist, wobei der zumindest eine Anschlusskontakt (4) des Sensors (2) mit einem Endbereich des zumindest einen elektrischen Leiters (14) des Kabels (12) verbunden und elektrisch kontaktiert ist, wobei der Sensor (2) sowie der Tragekörper (5) in dem Gehäuse angeordnet sind, wobei der Hauptkörper (6) und der Aufnahmekörper (7) in verschiedenen Positionen zueinander ausrichtbar sind, wobei nach der Montage des Sensors (2) der Hauptkörper (6) und der Aufnahmekörper (7) in einer der Positionen zueinander ausgerichtet und miteinander verbunden sind, wobei das Gehäuse (15) bei einer Umspritzung aus einem Kunststoffmaterial um die aus dem Tragekörper (5), dem Sensor (2) und einem Endbereich des Kabels (12) bestehende vormontierte Einheit gebildet ist.

2. Sensorvorrichtung (1) nach Anspruch 1, **dadurch gekennzeichnet, dass** der Hauptkörper (6) und der Aufnahmekörper (7) durch ein Filmscharnier miteinander verbunden sind.

3. Sensorvorrichtung (1) nach Anspruch 1 oder 2, **dadurch gekennzeichnet, dass** der Aufnahmekörper (7) für das Sensorelement (2) in einer Montageposition, in der das Sensorelement (2) an dem Aufnahmekörper (7) festgelegt wird, abgewinkelt zu dem Hauptkörper (6) ausgerichtet ist.

4. Sensorvorrichtung (1) nach einem der vorhergehenden Ansprüche, **dadurch gekennzeichnet, dass** der Hauptkörper (6) zumindest einen Führungskanal (8) aufweist.

5. Sensorvorrichtung (1) nach einem der vorhergehenden Ansprüche, **dadurch gekennzeichnet, dass** der Hauptkörper (6) zumindest einen Vorsprung (9) und/oder ein Fixierelement (10) aufweist.

6. Sensorvorrichtung (1) nach einem der vorhergehenden Ansprüche, **dadurch gekennzeichnet, dass** der Aufnahmekörper (7) zumindest ein Fixierelement (11) aufweist.

7. Verfahren zur Herstellung einer Sensorvorrichtung (1), wobei die Sensorvorrichtung (1) einen Sensor (2), der aus einem Sensorelement (3) zur Erfassung eines Parameters und zumindest einem zugehörigen Anschlusskontakt (4) besteht, einen einsückigen Tragekörper (5), der aus einem Hauptkörper (6) und einem Aufnahmekörper (7) für das Sensorelement (3) besteht, ein Gehäuse (15) aus einem Kunststoffmaterial und ein Kabel (12) mit zumindest einem elektrischen Leiter (13) aufweist, wobei das Sensorelement (3) an dem Tragekörper (5) befestigt ist, wobei der zumindest eine Anschlusskontakt (4) des Sensors (2) mit einem Endbereich des zumindest einen elektrischen Leiters (14) des Kabels (12) verbunden und elektrisch kontaktiert ist, wobei der Sensor (2) sowie der Tragekörper (5) in dem Gehäuse angeordnet sind, **gekennzeichnet durch** die Schritte: Einsetzen des Sensorelementes (3) in den Aufnahmekörper (7), danach Ausrichten des Hauptkörpers (6) und des Aufnahmekörpers (7) miteinander, wobei der Hauptkörper (6) und der Aufnahmekörper (7) miteinander ausrichtbar sind, danach Verbindung des Endbereiches des zumindest einen elektrischen Leiters (14) des Kabels (12) mit dem zumindest einen zugehörigen Anschlusskontakt (4), und danach Bildung des Gehäuses (15) bei einer Umspritzung aus einem Kunststoffmaterial um die aus dem Tragekörper (5), dem Sensor (2) und einem Endbereich des Kabels (12) bestehende vormontierte Einheit.

8. Verfahren nach Anspruch 7, **dadurch gekennzeichnet, dass** das Sensorelement (2) durch Umformen zumindest eines Fixierelementes des Aufnahmekörpers (7) an diesem befestigt wird.

9. Verfahren nach Anspruch 7 oder 8, **dadurch gekennzeichnet, dass** nach der erfolgten Ausrichtung der zumindest eine Anschlusskontakt (4) des Sensors (2) mit dem zumindest einen elektrischen Leiter (14) des Kabels (12) elektrisch kontaktiert wird.

## Claims

1. Sensor apparatus (1) having a sensor (2), which consists of a sensor element (3) for capturing a parameter and at least one associated connection contact (4), a one-piece supporting body (5), which consists of a main body (6) and a receiving body (7) for the sensor element (3), a housing (15) composed of a plastic material, and a cable (12) having at least one electrical conductor (13), wherein the sensor element (3) is fastened to the receiving body (7), wherein the at least one connection contact (4) of the sensor (2) is connected and electrically contact-connected to an end region of the at least one electrical conductor (14) of the cable (12), wherein the sensor (2) and the supporting body (5) are arranged in the housing, wherein the main body (6) and the receiving body (7) can be aligned with one another in various positions, wherein, after the sensor (2) has been mounted, the main body (6) and the receiving body (7) are aligned with one another in one of the positions and connected to one another, wherein the housing (15) is formed during injection moulding of a plastic material around the preassembled unit consisting of the supporting body (5), the sensor (2) and an end region of the cable (12) .

2. Sensor apparatus (1) according to Claim 1, **characterized in that** the main body (6) and the receiving body (7) are connected to one another by means of a film hinge.

3. Sensor apparatus (1) according to Claim 1 or 2, **characterized in that** the receiving body (7) for the sensor element (2) is aligned with the main body (6) in an angled manner in a mounting position in which the sensor element (2) is secured to the receiving body (7).

4. Sensor apparatus (1) according to one of the preceding claims, **characterized in that** the main body (6) has at least one guide channel (8).

5. Sensor apparatus (1) according to one of the preceding claims, **characterized in that** the main body (6) has at least one projection (9) and/or a fixing element (10).

6. Sensor apparatus (1) according to one of the preceding claims, **characterized in that** the receiving body (7) has at least one fixing element (11).

7. Method for producing a sensor apparatus (1), wherein the sensor apparatus (1) has a sensor (2), which consists of a sensor element (3) for capturing a parameter and at least one associated connection contact (4), a one-piece supporting body (5), which consists of a main body (6) and a receiving body (7) for the sensor element (3), a housing (15) composed of a plastic material, and a cable (12) having at least one electrical conductor (13), wherein the sensor element (3) is fastened to the supporting body (5), wherein the at least one connection contact (4) of the sensor (2) is connected and electrically contact-connected to an end region of the at least one electrical conductor (14) of the cable (12), wherein the sensor (2) and the supporting body (5) are arranged in the housing, **characterized by** the steps of: inserting the sensor element (3) into the receiving body (7), then aligning the main body (6) and the receiving body (7) with one another, wherein the main body (6) and the receiving body (7) can be aligned with one another, then connecting the end region of the at least one electrical conductor (14) of the cable (12) to the at least one associated connection contact (4), and then forming the housing (15) during injection moulding of a plastic material around the preassembled unit consisting of the supporting body (5), the sensor (2) and an end region of the cable (12).

8. Method according to Claim 7, **characterized in that** the sensor element (2) is fastened to the receiving body (7) by reshaping at least one fixing element of the receiving body (7).

9. Method according to Claim 7 or 8, **characterized in that**, after alignment, the at least one connection contact (4) of the sensor (2) is electrically contact-connected to the at least one electrical conductor (14) of the cable (12).

## Revendications

1. Dispositif capteur (1), possédant un capteur (2), lequel se compose d'un élément capteur (3) destiné à acquérir un paramètre; et d'au moins un contact de raccordement (4) associé, un corps porteur (5) monobloc, lequel se compose d'un corps principal (6) et d'un corps de logement (7) pour l'élément capteur (3), un boîtier (15) en une matière plastique et un câble (12) comprenant au moins un conducteur électrique (13), l'élément capteur (3) étant fixé au corps de logement (7), l'au moins un contact de raccordement (4) du capteur (2) étant relié et mis en contact électrique avec une zone d'extrémité de l'au moins un conducteur électrique (14) du câble (12), le capteur (2) ainsi que le corps porteur (5) étant disposés dans le boîtier, le corps principal (6) et le corps de logement (7) pouvant être orientés dans différentes positions l'un par rapport à l'autre, le corps principal (6) et le corps de logement (7) étant orientés l'un avec l'autre dans l'une des positions et reliés l'un à l'autre après le montage du capteur (2), Le boîtier (15) étant formé lors d'un surmoulage à partir d'une matière plastique autour de l'unité prémontée composée du corps porteur (5), du capteur (2) et d'une zone d'extrémité du câble (12).

2. Dispositif capteur (1) selon la revendication 1, **caractérisé en ce que** le corps principal (6) et le corps d'accueil (7) sont reliés entre eux par une charnière en film.

3. Dispositif capteur (1) selon La revendication 1 ou 2, **caractérisé en ce que** le corps de logement (7) pour l'élément capteur (2), dans une position de montage dans laquelle l'élément capteur (2) est fixé au corps de logement (7), est orienté de manière coudée par rapport au corps principal (6).

4. Dispositif capteur (1) selon l'une des revendications précédentes, **caractérisé en ce que** le corps principal (6) possède au moins un canal de guidage (8) .

5. Dispositif capteur (1) selon l'une des revendications précédentes, **caractérisé en ce que** le corps principal (6) possède au moins une partie saillante (9) et/ou un élément de blocage (10).

6. Dispositif capteur (1) selon l'une des revendications précédentes, **caractérisé en ce que** le corps de logement (7) possède au moins un élément de blocage (11).

7. Procédé de fabrication d'un dispositif capteur (1), le dispositif capteur (1) possédant un capteur (2), lequel se compose d'un élément capteur (3) destiné à acquérir un paramètre et d'au moins un contact de raccordement (4) associé, un corps porteur (5) monobloc, lequel se compose d'un corps principal (6) et d'un corps de logement (7) pour l'élément capteur (3), un boîtier (15) en une matière plastique et un câble (12) comprenant au moins un conducteur électrique (13), l'élément capteur (3) étant fixé au corps porteur (5), l'au moins un contact de raccordement (4) du capteur (2) étant relié et mis en contact électrique avec une zone d'extrémité de l'au moins un conducteur électrique (14) du câble (12), le capteur (2) ainsi que le corps porteur (5) étant disposés dans le boîtier, **caractérisé par** les étapes suivantes : introduction de l'élément capteur (3) dans le corps de logement (7), ensuite orientation du corps principal (6) et du corps de logement (7) l'un avec l'autre, ensuite liaison de la zone d'extrémité de l'au moins un conducteur électrique (14) du câble (12) avec l'au moins un contact de raccordement (4) associé, et ensuite formation du boîtier (15) lors d'un surmoulage à partir d'une matière plastique autour de l'unité prémontée composée du corps porteur (5), du capteur (2) et d'une zone d'extrémité du câble (12).

8. Procédé selon la revendication 7, **caractérisé en ce que** l'élément capteur (2) est fixé au corps de logement (7) par déformation d'au moins un élément de fixation de celui-ci.

9. Procédé selon la revendication 7 ou 8, **caractérisé en ce qu'**après avoir effectué l'orientation, l'au moins un contact de raccordement (4) du capteur (2) est mis en contact électrique avec l'au moins un conducteur électrique (14) du câble (12).
